# EUROPÄISCHE PATENTSCHRIFT

(11) **EP 0 527 700 B1**
(45) Veröffentlichungstag und Bekanntmachung des Hinweises auf die Patenterteilung: **20.09.1995**
(21) Anmeldenummer: 92810545.1
(22) Anmeldetag: 17.07.1992
(51) Int. Cl.: B60J 5/04

(54) **Aufprallträger für Fahrzeuge**
Impact beam for vehicles
Poutre de choc pour véhicules

(30) Priorität: 12.08.1991 CH 2376/91
(43) Veröffentlichungstag der Anmeldung: 17.02.1993
(73) Patentinhaber: ALUSUISSE-LONZA SERVICES AG, 8034 Zürich (CH)
(72) Erfinder: Frank, Simon, W-7708 Watterdingen (DE)

(56) Entgegenhaltungen:
- EP-A- 0 063 325
- EP-A- 0 244 579
- DE-A- 3 606 024
- DE-C- 3 709 489
- GB-A- 2 152 883

## Beschreibung

Die Erfindung betrifft einen Aufprallträger für Fahrzeugtüren, insbesondere für Türen von Personenkraftwagen, der aus einer Leichtmetallegierung stranggepresst und in der Fahrzeugtür etwa in Fahrtrichtung verlaufend beidends so festlegbar ist, dass eine Profilwand des Aufprallträgers als Innengurt zum Fahrzeuginnenraum weist und eine dazu im Abstand vorgesehene zweite Profilwand des Aufprallträgers einen Aussengurt bildet.

Derartige Aufprallträger sind aus der DE-A-3 606 024 bekannt und werden in den Fahrzeugtüren zur Sicherung der Fahrzeuginsassen gegen quer zur Fahrtrichtung angreifende, also seitliche Verformungskräfte bei Kollision vorgesehen. Zwar vermögen diese Aufprallträger gegenüber jenen I-förmigen Querschnittes nach EP-A-0 063 325 eine bessere Formsteifigkeit gegen Verwindung bei einer Aufprallverformung anzubieten, jedoch können auch sie bei sehr grosser Aufnahmekraft hin und wieder brechen.

Nach der DE-A-3 709 489 sollen Aufprallträger weitergehend so verbessert werden, dass sie bei geringem Gewicht ein hohes Mass an Formhaltigkeit bei ausreichendem Kompensationsvermögen für die auftretende Verformungsenergie aufweisen und bei einem Aufprall eine kontrollierbare Gestalt bei unversehrtem Innengurt annehmen. Hierzu wird der Aussengurt des Aufprallträgers etwa in seiner Längsmitte mit einem Paar von Randeinformungen versehen. Diese Entlastungskerben wirken der Durchbiegung des Aufprallträgers beim Seitenaufprall entgegen, der bei sehr hohen Streckgrenzen-Verhältnissen zum Bruch in der Endphase der Verformung neigt.

Die Einbauhöhe eines Aufprallträgers in einer Fahrzeugtür liegt üblicherweise oberhalb der Stossstangenhöhe von Personenkraftwagen. Dies hat zur Folge, dass bei einem Seitenaufprall zunächst der Türkasten unterhalb des Aufprallträgers ohne wesentliche Energieaufnahme eingedrückt wird und damit praktisch die gesamte Verformungsenergie vom Aufprallträger aufgenommen werden muss.

Angesichts dieses Standes der Technik hat sich der Erfinder zum Ziel gesetzt, Aufprallträger der eingangs erwähnten Art derart weiter auszugestalten, dass sie einen verbesserten Aufprallschutz bieten und ohne wesentlichen Mehraufwand in eine Fahrzeugtür einbaubar sind.

Zur erfindungsgemässen Lösung der Aufgabe führt, dass ein aus einer Leichtmetallegierung stranggepresstes Hohlkammerprofil mit mindestens zwei Profilkammern am Aufprallträger befestigt ist, wobei das Hohlkammerprofil in den Türkasten unterhalb des Aufprallträgers ragt und die Profilkammern parallel zu diesem verlaufen. Mit diesem Hohlkammerprofil ergibt sich ein zusätzlicher Aufprallschutz. Durch die Steifigkeit der Profilkammern kann das Hohlkammerprofil bereits beim ersten Aufprall einer Stossstange Energie aufnehmen, so dass insgesamt geringere, ins Fahrzeuginnere gerichtete Beschleunigungskräfte auftreten. Bevorzugt ist das Hohlkammerprofil am Aufprallträger lösbar befestigt.

Ein besonders wirksamer Aufprallschutz ergibt sich dann, wenn die vom Aufprallträger am weitesten entfernte Profilkammer bei geschlossener Fahrzeugtür teilweise unterhalb der obersten, im wesentlichen horizontalen Fläche und in Abstand zu einer ersten, im wesentlichen vertikalen Fläche eines Türschwellers liegt. Der Türschweller wirkt demzufolge bei einem Seitenaufprall als weiteres Gegenlager für das Hohlkammerprofil, wodurch ein zusätzlicher Aufprallschutz erreicht wird.

Das Hohlkammerprofil ist üblicherweise am Aufprallträger symmetrisch zu dessen Längsmitte angeordnet und erstreckt sich etwa über dessen halbe Länge; es kann aber auch die gesamte Länge des Aufprallträgers aufweisen.

Die Stirnseiten des Hohlkammerprofils sind aus Gründen des einfacheren Einbaus in eine Fahrzeugtür bevorzugt nach unten zulaufend abgeschrägt.

Nach einem weiteren Merkmal der Erfindung ist das Hohlkammerprofil über dessen gesamte Länge zumindest mit dem Innengurt des Aufprallprofils verhakt. Dies hat zur Folge, dass sich bei einem Seitenaufprall der Aufprallträger kaum mehr in die Lage des kleinsten Widerstandsmoments verwinden kann. Damit ermöglicht die erfindungsgemässe Verwendung des Hohlkammerprofils insbesondere auch den Einsatz von Aufprallträgern mit I-profil.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
- Fig. 1:: die Frontansicht einer Fahrzeugtür mit darin vorgesehenem Aufprallträger;
- Fig. 2:: den teilweisen Querschnitt durch Fig. 1 nach deren Linie II-II;
- Fig. 3:: eine Seitenansicht des Aufprallprofils;
- Fig. 4:: die Draufsicht auf Fig. 3;
- Fig. 5, 6:: den Querschnitt durch weitere Ausführungsformen der Verbindung zwischen Aufprallträger und Hohlkammerprofil.

In einer Fahrzeugtür 10 für einen aus Gründen der Übersichtlichkeit nicht wiedergegebenen Personenkraftwagen verläuft innerhalb eines geschlossenen Türkastens 11 ein stranggepresstes Aluminiumprofil als Aufprallträger 20. Dessen Abstand i von der oberen Kante 14 des Türkastens 11 ist grösser als die Absenktiefe einer in einem Rahmen 12 erkennbaren Fensterscheibe 13. Vom Aufprallträger 20 ragt ein an diesem lösbar befestigtes, beidends nach unten zulaufend abgeschrägtes Hohlkammerprofil 40 ab.

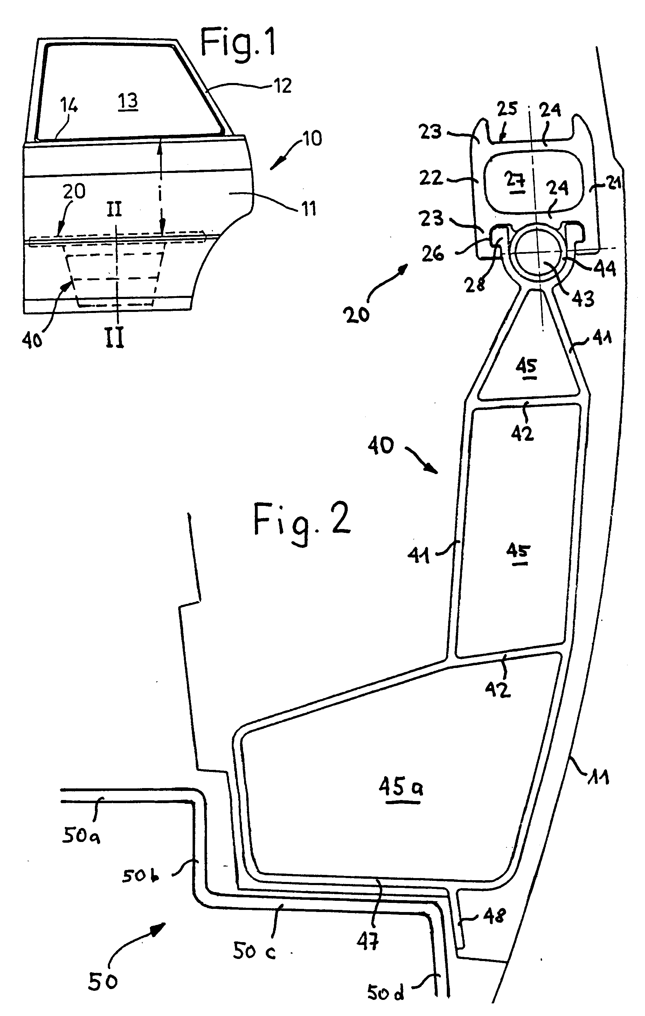

Der Aufprallträger 20 weist gemäss Fig. 2 querschnittlich zwei in Abstand zueinander parallele Wände auf, die in Einbaulage des Aufprallträgers 20 einen zum Fahrzeuginneren gerichteten Innengurt 22 sowie einen der Türaussenfläche benachbarten Aussengurt 21 bilden. Letzterer ist mit dem Innengurt durch zwei schmale Querwände 24 zu einem Hohlprofil mit Profilkammer 27 ergänzt.

Sowohl Innengurt 22 als auch Aussengurt 21 ragen beidseits über die Aussenflächen 25 der Querwände 24 hinaus und bilden so Wulstabschnitte 23. An den Innenseiten der unteren Wulstabschnitte 23 sind längs des Aufprallträgers 20 verlaufende Nuten 26 eingeformt, in welche von den Profilwänden 41 des Hohlkammerprofils 40 abragende Leisten 28 eingreifen. Die Innenseiten der Profilwände 41 bilden im Bereich des Aufprallträgers 20 zusammen mit der Querwand 24 einen Aufnahmeraum 43 für ein Spreizelement 44. Das Hohlkammerprofil 40 weist mehrere Profilkammern 45 auf, welche durch die Profilwände 41 und diese verbindende Querstege 42 gebildet sind. Die vom Aufprallträger 20 am weitesten entfernte Profilkammer 45a liegt bei geschlossener Fahrzeugtür 10 teilweise unterhalb der obersten, im wesentlichen horizontalen Fläche 50a und und in Abstand zu einer ersten, im wesentlichen vertikalen Fläche 50b eines Türschwellers 50. Von der Bodenwand 47 der untersten Profilkammer 45a ragt etwa senkrecht eine Profilleiste 48 nach unten ab, welche bei geschlossener Fahrzeugtür 10 einer zweiten, im wesentlichen vertikalen Fläche 50d des Türschwellers 50 in Abstand gegenüberliegt. Die Profilleiste 48 kann bei einem Seitenaufprall einen normalerweise am Türblech befestigten Crash-Haken ersetzen bzw. in seiner Rückhaltefunktion unterstützen.

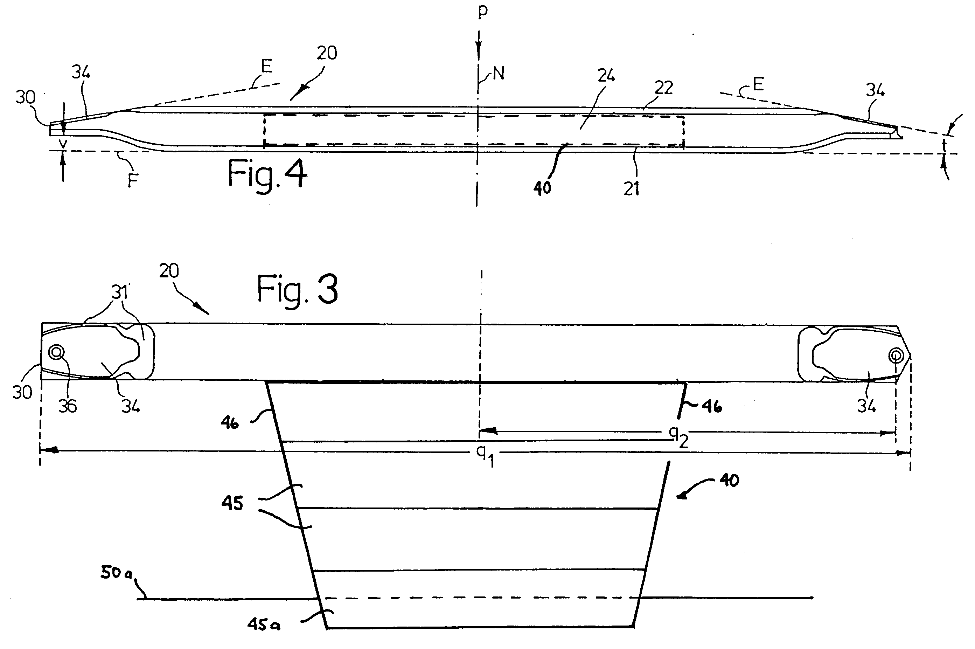

Der an beiden Enden in einer Ebene E abgeschrägte Aufprallträger 20 weist eine Gesamtlänge q₁ auf. Jene Ebene E schliesst mit der Trägerinnenseite des Innengurts 22 einen spitzen Winkel t ein. Durch diesen schräg gelegten Schnitt entsteht eine Stirnkante 30, die aus der Ebene F der ursprünglichen Kontour der Trägerinnenseite in einem Versetzungsmass v aufwärts versetzt ist. In der Seitenansicht nach Fig. 3 ist die durch den beschriebenen Schnittvorgang in der Ebene E entstehende Schrägfläche 31 zu erkennen, die sich aus Schnittflächen der Querwände 24 und des Innengurts 22 zusammensetzt sowie U-förmiger Gestalt ist. Das Hohlkammerprofil 40, dessen Stirnseiten 46 nach unten zulaufend abgeschrägt sind, ist am Aufprallträger 20 symmetrisch zu dessen Längsmitte angeordnet und erstreckt sich über etwa die halbe Länge des Aufprallträgers 20.

Die in Fig. 4 durch einen Pfeil P angedeutete Kraftrichtung bei einem Aufprall lässt die weiter oben beschriebene Lage des Aufprallträgers 20 in der Türkonstruktion besonders deutlich werden: Die Kraft P trifft in einer angenommenen Geraden N auf den Aussengurt 21, der sich zum Wageninnenraum hin zu verformen trachtet. Der Abstand der in Profillängsmitte liegenden Geraden N von der Einspannstelle -- Bohrung 36 im Innengurt 22 -- ist in Fig. 3 mit q₂ bezeichnet. Die durch die beschriebene Schnitt-ebene E und die dazu erläuterte Verkröpfung der Trägerinnenseite entstandenen Profilenden 34 werden in nicht dargestellte Sicken des Türrahmens eingelegt und mittels die Bohrungen 36 durchsetzender Schrauben befestigt.

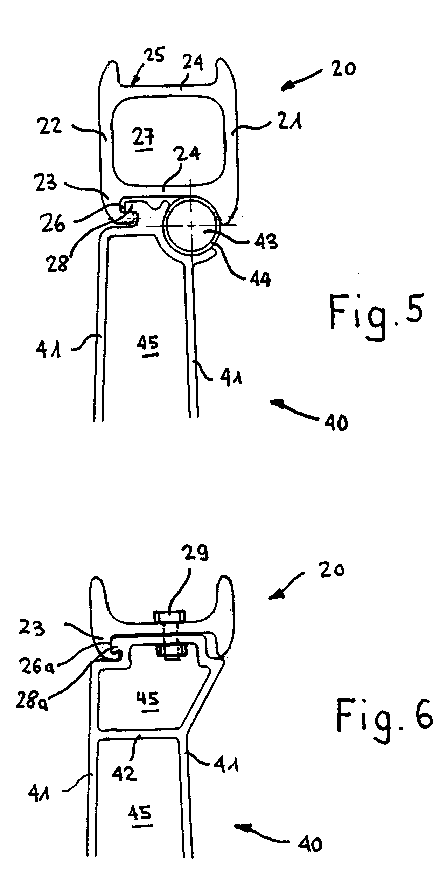

Die aus Fig. 5 ersichtliche Verbindung von Hohlkammerprofil 40 und Aufprallträger 20 weist eine nur einseitige Verklammerung der beiden Teile durch eine längslaufende Nut 26 im Wulstabschnitt 23 am Innengurt 22 und eine in diese eingreifende Leiste 28 des Hohlkammerprofils 40 auf. Analog der Ausführungsform in Fig. 2 wird die Verklammerung mit einem Spreizelement 44 fixiert.

Gemäss Fig. 6 ist im Wulstabschnitt 23 auf der Seite des Innengurts 22 eine hakenförmige Nut 26a eingeformt, in welche eine Nasenleiste 28a des Hohlkammerprofils 40 einragt. Über Schraubverbindungen 29 im stirnseitigen Bereich des Hohlkammerprofils 40 wird die Verklammerung fixiert. Das Aufprallprofil 20 ist hier als I-Profil ausgebildet.

## Patentansprüche

1. Aufprallträger für Fahrzeugtüren, insbesondere für Türen von Personenkraftwagen, der aus einer Leichtmetallegierung stranggepresst und in der Fahrzeugtür (10) etwa in Fahrtrichtung verlaufend beidends so festlegbar ist, dass eine Profilwand des Aufprallträgers (20) als Innengurt (22) zum Fahrzeuginnenraum weist und eine dazu im Abstand vorgesehene zweite Profilwand des Aufprallträgers (20) einen Aussengurt (21) bildet,
dadurch gekennzeichnet,
dass ein aus einer Leichtmetallegierung stranggepresstes Hohlkammerprofil (40) mit mindestens zwei Profilkammern (45) am Aufprallträger (20) befestigt ist, wobei das Hohlkammerprofil (40) in den Türkasten (11) unterhalb des Aufprallträgers (20) ragt und die Profilkammern (45) parallel zu diesem verlaufen.

2. Aufprallträger nach Anspruch 1, dadurch gekennzeichnet, dass die vom Aufprallträger (20) am weitesten entfernte Profilkammer (45a) bei geschlossener Fahrzeugtür (10) teilweise unterhalb der obersten, im wesentlichen horizontalen Fläche (50a) und in Abstand zu einer ersten, im wesentlichen vertikalen Fläche (50b) eines Türschwellers (50) liegt.

3. Aufprallträger nach Anspruch 1 oder 2, dadurch gekennzeichnet, dass das Hohlkammerprofil (40) am Aufprallträger (20) symmetrisch zu dessen Längsmitte angeordnet ist und sich etwa über dessen halbe Länge q₁ erstreckt.

4. Aufprallträger nach einem der Ansprüche 1 bis 3, dadurch gekennzeichnet, dass die Stirnseiten (46) des Hohlkammerprofils (40) nach unten zulaufend abgeschrägt sind.

5. Aufprallträger nach einem der Ansprüche 1 bis 4, dadurch gekennzeichnet, dass das Hohlkammerprofil (40) über dessen gesamte Länge zumindest mit dem Innengurt (22) des Aufprallprofils (20) verhakt (26,28;26a,28a) ist.

6. Aufprallträger nach einem der Ansprüche 1 bis 5, dadurch gekennzeichnet, dass von der Bodenwand (47) der untersten Profilkammer (45a) etwa senkrecht eine Profilleiste (48) nach unten abragt, welche bei geschlossener Fahrtzeugtür (10) einer zweiten, im wesentlichen vertikalen Fläche (50d) eines Türschwellers (50) in Abstand gegenüberliegt.

7. Aufprallträger nach einem der Ansprüche 1 bis 6, dadurch gekennzeichnet, dass das Hohlkammerprofil (40) am Aufprallträger (20) lösbar befestigt ist.

## Claims

1. Impact carrier for vehicle doors, in particular for doors of passenger cars, which is extruded from a light metal alloy and can be fixed at both ends in the vehicle door (10) extending approximately in the direction of travel in such a way that one profile wall of the impact carrier (20) as the inner flange (22) faces towards the interior of the vehicle and a second profile wall of the impact carrier (20), which is provided at a distance therefrom, forms an outer flange (21), characterised in that a hollow chamber profile (40) with at least two profile chambers (45), which is extruded from a light metal alloy, is fixed to the impact carrier (20), wherein the hollow chamber profile (40) extends into the door casing (11) below the impact carrier (20) and the profile chambers (45) extend parallel thereto.

2. Impact carrier according to claim 1, characterised in that the profile chamber (45a) furthest away from the impact carrier (20) when the vehicle door (10) is closed is located partly below the uppermost, essentially horizontal surface (50a) and at a distance from a first, essentially vertical surface (50b) of a door sill (50).

3. Impact carrier according to claim 1 or 2, characterised in that the hollow chamber profile (40) is arranged on the impact carrier (20) symmetrically to the longitudinal centre thereof, and extends approximately over half its length q₁.

4. Impact carrier according to any of claims 1 to 3, characterised in that the end faces (46) of the hollow chamber profile (40) are bevelled to taper downwards.

5. Impact carrier according to any of claims 1 to 4, characterised in that the hollow chamber profile (40) over the whole length thereof is hooked at least to the inner flange (22) of the impact profile (20) (26, 28; 26a, 28a).

6. Impact carrier according to any of claims 1 to 5, characterised in that from the bottom wall (47) of the lowermost profile chamber (45a) a profile strip (48) projects approximately perpendicularly downwards, which when the vehicle door (10) is closed is located at a distance opposite a second, essentially vertical surface (50d) of the door sill (50).

7. Impact carrier according to any of claims 1 to 6, characterised in that the hollow chamber profile (40) is releasably fixed to the impact carrier (20).

## Revendications

1. Amortisseur de chocs pour des portières de véhicules automobiles, en particulier pour des portières de voitures particulières, qui est extrudé en un alliage de métal léger et qui peut être fixé des deux extrémités dans la portière (10) du véhicule en s'étendant approximativement en direction de circulation, de telle sorte qu'une paroi profilée de l'amortisseur de chocs (20) est dirigée en tant que membrure intérieure (22) vers l'espace intérieur du véhicule, et qu'une seconde paroi profilée de l'amortisseur de chocs (20) prévue à distance par rapport à celle-ci forme une membrure extérieure (21),
caractérisé en ce que
un profilé creux (40) extrudé en un alliage de métal léger et comportant au moins deux chambres profilées (45) est fixé sur l'amortisseur de chocs (20), le profilé creux (40) pénétrant dans le caisson de portière (11) au-dessous de l'amortisseur de chocs (20) et les chambres profilées (45) s'étendant parallèlement à celui-ci.

2. Amortisseur de chocs selon la revendication 1, caractérisé en ce que la chambre profilée (45a) la plus éloignée de l'amortisseur de chocs (20) se trouve, lorsque la portière du véhicule est fermée, partiellement au-dessous de la surface supérieure (50a) sensiblement horizontale et à distance par rapport à une première surface (50b) sensiblement verticale d'un seuil de porte (50).

3. Amortisseur de chocs selon l'une ou l'autre des revendications 1 et 2, caractérisé en ce que le profilé creux (40) est agencé sur l'amortisseur de chocs (20) symétriquement par rapport à son milieu longitudinal et s'étend approximativement sur la moitié de sa longueur q₁.

4. Amortisseur de chocs selon l'une quelconque des revendications 1 à 3, caractérisé en ce que les faces frontales (46) du profilé creux (40) sont biseautées vers le bas.

5. Amortisseur de chocs selon l'une quelconque des revendications 1 à 4, caractérisé en ce que le profilé creux (40) est accroché (26, 28 ; 26a, 28a) sur toute sa longueur du moins à la membrure intérieure (22) du profilé anti-choc (20).

6. Amortisseur de chocs selon l'une quelconque des revendications 1 à 5, caractérisé en ce qu'une barrette profilée (48) dépasse depuis la paroi de fond (47) de la chambre profilée inférieure (45a) approximativement verticalement vers le bas, et cette barrette se trouve, lorsque la portière du véhicule est fermée, à distance à l'opposé d'une seconde surface (50d) sensiblement verticale d'un seuil de porte (50).

7. Amortisseur de chocs selon l'une quelconque des revendications 1 à 6, caractérisé en ce que le profilé creux (40) est fixé de façon détachable sur l'amortisseur de chocs (20).
